# EUROPÄISCHE PATENTSCHRIFT

(11) **EP 2 118 513 B1**
(45) Veröffentlichungstag und Bekanntmachung des Hinweises auf die Patenterteilung: **28.07.2010**
(21) Anmeldenummer: 07819029.5
(22) Anmeldetag: 16.10.2007
(51) Int. Cl.: F16D 65/092, F16D 65/847

(54) **SCHEIBENBREMSBELAG MIT VERRINGERTER WÄRMEÜBERTRAGUNG AN EINE ZUSPANNEINHEIT**
DISK BRAKE PAD HAVING REDUCED HEAT TRANSFER TO AN APPLICATION DEVICE
GARNITURE DE FREIN À DISQUE AVEC RÉDUCTION DE LA TRANSMISSION DE CHALEUR À UNE UNITÉ D'APPLICATION DU FREIN

(30) Priorität: 09.01.2007 DE 102007001378
(43) Veröffentlichungstag der Anmeldung: 18.11.2009
(73) Patentinhaber: Federal-Mogul Friction Products GmbH, 65520 Bad Camberg (DE)
(72) Erfinder: EMMETT, Robert, A., Wilberfoss, York YO415PS (GB); STRAUSS, Wilfried, 69483 Wald-Michelbach (DE)
(74) Vertreter: Kurig, Thomas
(86) Internationale Anmeldenummer: PCT/EP2007/008959
(87) Internationale Veröffentlichungsnummer: WO 2008/083765

(56) Entgegenhaltungen:
- EP-A- 0 191 597
- EP-A- 1 217 246
- WO-A-2004/013510
- US-A1- 2006 137 943

## Beschreibung

Die vorliegende Erfindung betrifft einen Scheibenbremsbelag einer Scheibenbremse, mit einer Trägerplatte, und mindestens einem Reibbelag mit mindestens einer Reibfläche. Spezieller betrifft die vorliegende Erfindung einen Scheibenbremsbelag mit verminderter Wärmeleitfähigkeit von der Reibfläche über den Reibbelag zu einer Zuspanneinheit.

Ein gattungsgemäßes Scheibenbremsbelag geht z.B. aus US-A-2006/0137943 hervor.

Es sind bereits verschiedene Ausführungsformen von Scheibenbremsbelägen bekannt.

Die EP 0503625 A offenbart eine Bremsbacke für eine Scheibenbremse mit einer Rückenplatte aus Metall, mit der ein Reibmaterialblock verbunden ist. Zwischen der Rückenplatte und dem Reibbelag ist eine Wärmeisolationsschicht aus Keramik angeordnet, die durch ein Plasmaspritzverfahren vollflächig aufgebracht wird. In einer Ausführungsform ist eine rechteckige Ausnehmung in der Rückenplatte vorgesehen, die zusammen mit einem Steg mit etwa schwalbenschwanzförmiger Kontur zur Befestigung des Bremsbelags an einer Bremszange dient, so dass eine konstante Materialdicke vorliegt.

In US 4685543 A ist eine Trägerplatte für einen Bremsbelag beschrieben, die aus einer dünnen Lage korrosionsbeständigen Materials geformt ist. Die Trägerplatte weist einen vertieften, im Wesentlichen kreisförmigen Bereich auf, welcher der Form des Bremskolbens entspricht. In dem vertieften Bereich wird durch einen Luftspalt zwischen Basiselement und Bremszylinder eine thermische Barriere gebildet.

Darüber hinaus ist in der DE 1600155 A ein Bremsbelagträger für Scheibenbremsen beschrieben, bei dem eine zusätzliche Platte bzw. ein Blech fest an der Trägerplatte des Bremsbelags angebracht ist, um die Geräuschbildung zu vermindern und einen möglichst gleichmäßigen Belagverschleiß zu erreichen. Das Reibbelagmaterial steht in direktem Kontakt mit der Trägerplatte.

Es ist wünschenswert, den Wärmedurchgang von der Reibfläche der Reibbeläge zu der Stelle zu verringern, an der eine Zuspanneinheit an dem Scheibenbremsbelag angreift.

Es ist wünschenswert, die Schallübertragung von der Reibfläche auf die Zuspanneinheit und damit auf die Radbremse zu verringern.

Gemäß einem Aspekt der vorliegenden Erfindung wird ein Scheibenbremsbelag einer Scheibenbremse bereitgestellt. Der Scheibenbremsbelag umfasst eine Trägerplatte, und mindestens einen Reibbelag mit mindestens einer Reibfläche. Der Scheibenbremsbelag umfasst mindestens ein Isolationselement, das auf der Trägerplatte angeordnet ist. Das Isolationselement ist auf der Seite der Trägerplatte angeordnet, die dem Reibbelag abgewandt ist. Dadurch kann der Wärmeübergang von der Trägerplatte auf eine Zuspanneinheit beträchtlich reduziert werden. Der mindestens eine Reibbelag mit mindestens einer Reibfläche ist dabei nur auf einer Seite der Trägerplatte angeordnet.

Die Trägerplatte ist auf der dem Reibbelag abgewandten Seite mit mindestens einer Erhebung versehen, die in dem Bereich angeordnet ist, an dem eine Zuspanneinheit an der Trägerplatte ansetzt. Die Erhebung wölbt sich auf der dem Reibbelag abgewandten Seite aus der Trägerplatte vor. Durch die Erhebung kann ein Zwischenraum zwischen der Trägerplatte geschaffen werden, der zur Luftkühlung genutzt werden kann. Zusätzlich kann die Erhebung die Wärmeleitung von der Reibfläche zu der Zuspanneinheit verringern, indem einerseits die Entfernung zwischen Reibfläche zu der Zuspanneinheit erhöht wird und anderserseits der Querschnitt der Verbindung zwischen Trägerplatte und der Zuspanneinheit erhöht wird.

Das mindestens eine Isolationselement, ist (jeweils) nur in dem Bereich der mindestens einen Erhebung auf der Trägerplatte angeordnet. Durch diese Anordnung kann der Materialaufwand des Isolationselements beträchtlich verringert werden.

In einer anderen beispielhaften Ausführungsform ist das mindestens eine Isolationselement nur in dem Bereich angeordnet, der dafür bestimmt ist, dass dort eine Zuspanneinheit an der Trägerplatte ansetzt. Dadurch wird erreicht, dass der Materialaufwand für das Isolationselement weiter gesenkt werden kann. Diese Ausführungsform weist den zusätzlichen Vorteil auf, dass der nicht durch das Isolationselement bedeckte Teil der Trägerplatte zur Kühlung des Bremsbelages beitragen kann.

In einer weiteren beispielhaften Ausführungsform ist das Isolationselement mit Nuten versehen. Die Nuten können beispielsweise als Kreuznuten ausgeführt sein. Kreuznuten ermöglichen es, dass Luft zwischen den Zuspanneinheiten und den Isolationselementen durchströmt und so den Wärmeübergang verringert und die Zuspanneinheit kühlt. Kreuznuten können auch dazu verwendet werden, um die Zuspanneinheit und den Bremsbelag gegeneinander auszurichten bzw. zu zentrieren. Es wird ebenfalls in Erwägung gezogen, runde Vertiefungen oder beispielsweise sternförmige Nuten zu verwenden.

In einer anderen beispielhaften Ausführungsform ist das Isolationselement an die Trägerplatte an- bzw. darin eingegossen oder an die Trägerplatte angesintert.

Gemäß einer weiteren beispielhaften Ausführungsform ist das Isolationselement an der Trägerplatte durch Formschluss an der Trägerplatte befestigt. Dies kann beispielsweise durch ein mit der Trägerplatte verschraubtes oder vernietetes Isolationselement umgesetzt werden. Es ist ebenfalls möglich, das Isolationselement über einen Schnappmechnanismus an der Trägerplatte zu befestigen.

In einer anderen beispielhaften Ausgestaltung der vorliegenden Erfindung ist das Isolationselement kraftschlüssig an der Trägerplatte befestigt. Das Isolationselement kann beispielsweise durch einen Dübel oder einen Stift an der Trägerplatte befestigt werden, der in eine entsprechende Ausnehmung in der Trägerplatte eingreift. Es ist ebenfalls vorgesehen, das Isolationselement sowohl durch Kraftschluss als auch durch Formschluss an der Trägerplatte zu befestigen. Bevorzugt kann das Isolationselement das zwischen dem Bremskolben und der Trägerplatte angeordnet ist auch Ausformungen aufweisen mit denen das Isolationselement auch auf dem Bremskolben befestigt werden kann (beispielsweise durch Form- und/oder Kraftschluss beispielsweise entsprechend der Befestigung des Isolationselements an der Trägerplatte).

In einer anderen beispielhaften Ausführungsform der vorliegenden Erfindung ist das Isolationselement ein Wärmeisolationselement. Diese Ausführungsform ist darauf gerichtet, die Erwärmung der Zuspanneinheit der Scheibenbremse beim Bremsvorgang zu verringern.

Gemäß einer zusätzlichen beispielhaften Ausführungsform der vorliegenden Erfindung ist das Isolationselement ein Schwingungs- bzw. Schallisolationselement. Diese Ausführungsform soll die Geräuschentwicklung beim Bremsvorgang verringern.

In einer weiteren Ausführungsform der vorliegenden Erfindung ist eine Isolationsschicht zwischen dem Reibblag und der Trägerplatte angeordnet. Dadurch kann der Wärmedurchgang durch den Bremsbelag weiter reduziert werden, wodurch es ermöglicht wird, die Erwärmung der Zuspanneinheit weiter zu verringern.
Figur 1 zeigt eine Ausführungsform eines erfindungsgemäßen Bremsbelag in einer Teilschnittansicht.
Figur 2 zeigt eine andere Ausführungsform eines erfindungsgemäßen Bremsbelag in einer Teilschnittansicht.

In der folgenden detaillierten Beschreibung einiger Ausführungsformen der vorliegenden Erfindung werden sowohl in den Zeichnungen als auch in der Beschreibung gleiche Bezugszeichen für gleiche oder ähnliche Elemente verwendet. Die Figuren können teilweise schematisch und nicht maßstabsgerecht sein. Es wird hier explizit darauf hingewiesen, das der Fachmann die Offenbarungen der jeweiligen Figuren selbstverständlich kombinieren kann.

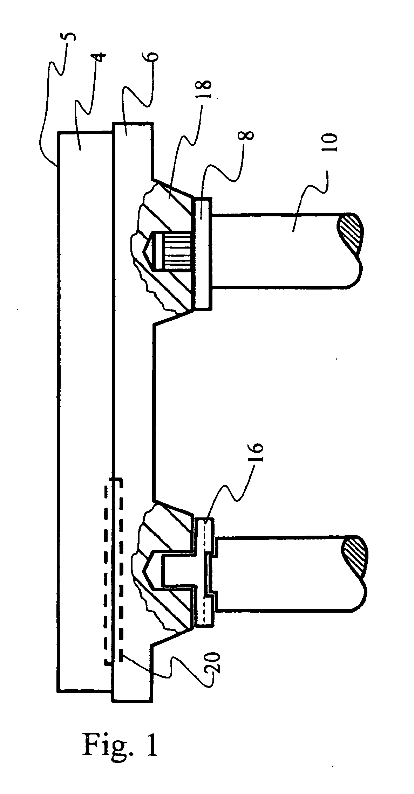

Figur 1 zeigt eine Ausführungsform eines erfindungsgemäßen Bremsbelag in einer Teilschnittansicht. Der dargestellte Scheibenbremsbelag umfast dabei eine Trägerplatte 6, und einen Reibbelag 4 mit einer Reibfläche 5. Auf der Rückseite der Trägerplatte sind bei der dargestellten Ausführungsform Erhebungen 18 ausgeführt, die den Abstand zwischen der Reibfläche und dem Ansatzpunkt der Zuspanneinheit 10 vergrößert.

Die Zuspanneinheiten 10 sind in den Figuren als Bremskolben ausgeführt. Aus Gründen der Klarheit wurde darauf verzichtet, weitere Teile der Zuspanneinheit wie beispielsweise die Bremszange darzustellen. Es wurde ebenfalls darauf verzichtet, die Bremsscheibe darzustellen. Es sind zwei Isolationselemente 8 auf der dem Reibbelag 6 abgewandten Seite der Trägerplatte 6 angeordnet. Das eine Isolationselement 8 ist ohne jede Vertiefung ausgeführt, wobei die Kontaktfläche zu der Zuspanneinheit im Wesentlichen glatt bzw. eben ist. Das andere Isolationselement ist mit einer Kreuznut 16 versehen. Beide Isolationselemente sind mit Dübeln versehen, die zur Befestigung der Isolationselemente an der Trägerplatte dienen.

Das Isolationselement 8 ist mit einem Dübel durch Kraftschluss an der Trägerplatte befestigt. Das Isolationselement mit der Kreuznut 16 ist mit einem Vorsprung in eine entsprechende Ausnehmung (die nicht nitwendigerweise rund sein muss) der Trägerplatte eingeklebt.

Der Bremsbelag kann zusätzlich, wie durch das gestrichelte Rechteck angedeutet, mit einer zusätzlichen Isolationsschicht 20 versehen sein, um die Wärmeleitung von der Reibfläche 5 zu der Zuspanneinheit weiter zu verringern.

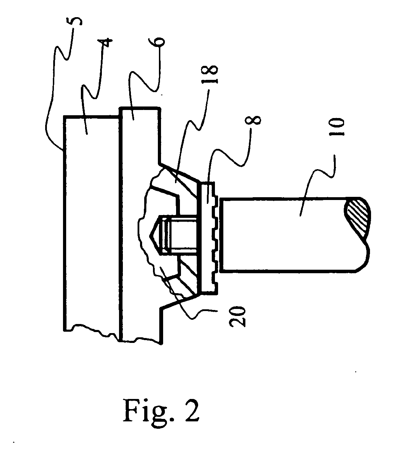

Figur 2 zeigt eine andere Ausführungsform eines erfindungsgemäßen Bremsbelag in einer Teilschnittansicht.

Im Gegensatz zu dem in Figur 1 dargestellten Bremsbelag ist die Erhebung 18 als eine Verformung der Trägerplatte 4 ausgeführt, wodurch die Dicke der Trägerplatte im Wesentlichen überall gleich ist. Durch diese Ausführungsform des Bremsbelags entsteht an der dem Reibbelag zugewandten Seite eine Vertiefung, die in Figur 2 mit einer Isolationsschicht 20 gefüllt ist. In Figur 2 ist das Isolationselement 8 mit einem angeformten Gewinde in eine entsprechende Gewindebohrung in der Trägerplatte 6 eingeschraubt. Die Kontaktfläche des Isolationselements 8 mit der Zuspanneinheit 10 weist eine Struktur auf, die den Wärmeübergang zwischen dem Bremsbelag und der Zuspanneinheit weiter herabsetzt.

Die vorliegende Erfindung reduziert den Wärmeübergang von Bremsbelägen auf die Elemente der Zuspanneinrichtung durch eine Isolationsschicht bzw. durch Isolationselemente, die auf der Rückseite der Trägerplatte der Bremsbeläge angeordnet sind. Die Erfindung ist besonders für Bremsbeläge geeignet, die auf der Rückseite der Trägerplatte mit Erhebungen versehen sind, die als Kontaktfläche zu den Druckkolben dienen.

Durch die vorliegende Erfindung können die folgenden Vorteile erreicht werden:
- eine Verringerung des Wärmedurchgangs; und
- eine effektive Geräuschdämpfung.

Auf der Rückseite des Bremsbelages kann sich (mindestens eine) Erhebung befinden, in die form- oder kraftschlüssig ein Isolationselement eingesetzt wird. Das Isolationselement kann beispielsweise als ein Teller ausgeführt sein, an dem ein Zapfen vorragt. Beide Formteile sind aus einem Material hergestellt. Das Isolationselement wird aus einem Werkstoff hergestellt, welcher zum einen eine hohe Druckfestigkeit und zum anderen einen niedrigen Wärmedurchgangskoeffizient aufweist. In Ergänzung hierzu kann über das zusätzliche Isolationselement mit dem entkoppelten Übertrag zwischen Belag und Druckkolben (d. h. Zuspanneinheit) eine Geräuschreduzierung bewirkt werden. Durch das Isolationselement wird eine (Eigen-) Frequenzverlagerung des Belages erreicht, welche die Reduzierung der Geräusche bedingt.

## Patentansprüche

1. Scheibenbremsbelag (2) einer Scheibenbremse, umfassend
- eine Trägerplatte (6), und
- mindestens einen Reibbelag (4) mit mindestens einer Reibfläche (5),
- wobei mindestens ein Isolationselement (8) auf der dem Reibbelag (4) abgewandten Seite der Trägerplatte (6) angeordnet ist,
**dadurch gekennzeichnet, dass** die Trägerplatte (6) auf der dem Reibbelag (4) abgewandten Seite mindestens eine Erhebung (18) aufweist, die in dem Bereich angeordnet ist, an dem eine Zuspanneinheit (10) einer Scheibenbremse an der Trägerplatte (6) ansetzen kann, wobei das mindestens eine Isolationselement (8) nur in dem Bereich der mindestens einen Erhebung (18) auf der Trägerplatte (6) angeordnet ist.

2. Scheibenbremsbelag (2) gemäß Anspruch 1, wobei das mindestens eine Isolationselement (8) nur in dem Bereich angeordnet ist, in dem eine Zuspanneinheit (10) an der Trägerplatte (6) ansetzt.

3. Scheibenbremsbelag (2) gemäß einem der vorstehenden Ansprüche, **dadurch gekennzeichnet, dass** das Isolationselement (8) mit Nuten (16) versehen ist.

4. Scheibenbremsbelag (2) gemäß einem der vorstehenden Ansprüche, **dadurch gekennzeichnet, dass** das Isolationselement (8) an der Trägerplatte (6) an- bzw. darin eingegossen oder an die Trägerplatte (6) angesintert oder angeklebt ist.

5. Scheibenbremsbelag (2) gemäß einem der vorstehenden Ansprüche, **dadurch gekennzeichnet, dass** das Isolationselement (8) durch Formschluss an der Trägerplatte (6) befestigt ist.

6. Scheibenbremsbelag (2) gemäß einem der vorstehenden Ansprüche, **dadurch gekennzeichnet, dass** das Isolationselement (8) kraftschlüssig an der Trägerplatte (6) befestigt ist.

7. Scheibenbremsbelag (2) gemäß einem der vorstehenden Ansprüche, **dadurch gekennzeichnet, dass** das Isolationselement (8) ein Wärmeisolationselement ist.

8. Scheibenbremsbelag (2) gemäß einem der vorstehenden Ansprüche, **dadurch gekennzeichnet, dass** das Isolationselement (8) ein Schwingungs- bzw. Schallisolationselement ist.

9. Scheibenbremsbelag (2) gemäß einem der vorstehenden Ansprüche, **dadurch gekennzeichnet, dass** eine Isolationsschicht (20) zwischen dem Reibblag (4) und der Trägerplatte (6) angeordnet ist.

## Claims

1. A disc brake pad (2) of a disc brake, comprising
- a carrier plate (6), and
- at least one friction pad (4) with at least one friction surface (5),
- wherein at least one insulating element (8) is arranged on the side of the carrier plate (6) facing away from the friction pad (4),
**characterized in that** the carrier plate (6) on the side facing away from the friction pad (4) comprises at least one elevation (18) which is arranged in the region in which a clamping unit (10) of a disc brake can start on the carrier plate (6), wherein the at least one insulating element (8) is only arranged in the region of the at least one elevation (18) on the carrier plate (6).

2. The disc brake (2) according to Claim 1, wherein the at least one insulating element (8) is only arranged in the region in which a clamping unit (10) starts on the carrier plate (6).

3. The disc brake pad (2) according to any one of the preceding claims, **characterized in that** the insulating element (8) is provided with grooves (16).

4. The disc brake pad (2) according to any one of the preceding claims, **characterized in that** the insulating element (8) is cast onto or into the carrier plate (6) or is sintered or glued onto the carrier plate (6).

5. The disc brake pad (2) according to any one of the preceding claims, **characterized in that** the insulating element (8) is fastened to the carrier plate (6) through positive connection.

6. The disc brake pad (2) according to any one of the preceding claims, **characterized in that** the insulating element (8) is non-positively fastened to the carrier plate (6).

7. The disc brake pad (2) according to any one of the preceding claims, **characterized in that** the insulating element (8) is a heat insulating element.

8. The disc brake pad (2) according to any one of the preceding claims, **characterized in that** the insulating element (8) is a vibration or sound insulating element.

9. The disc brake pad (2) according to any one of the preceding claims, **characterized in that** an insulating layer (20) is arranged between the friction pad (4) and the carrier plate (6).

## Revendications

1. Garniture de frein à disques (2) d'un frein à disques, comprenant
- une plaque support (6), et
- au moins une garniture de frottement (4) avec au moins une surface de frottement (5),
- au moins un élément d'isolation (8) étant disposé sur le côté, opposé à la garniture de frottement (4), de la plaque support (6),
**caractérisée en que** la plaque support (6) présente sur le côté opposé à la garniture de frottement (4) au moins une éminence (18) qui est disposée dans la zone sur laquelle une unité d'application de frein (10) d'un frein à disques peut s'appliquer sur la plaque support (6), le au moins un élément d'isolation (8) étant disposé sur la plaque support (6) uniquement dans la zone de la au moins une éminence (18).

2. Garniture de frein à disques (2) selon la revendication 1, le au moins un élément d'isolation (8) étant disposé seulement dans la zone dans laquelle une unité d'application de frein (10) s'applique sur la plaque support (6).

3. Garniture de frein à disques (2) selon l'une quelconque des revendications précédentes, **caractérisée en ce que** l'élément d'isolation (8) est doté de rainures (16).

4. Garniture de frein à disques (2) selon l'une quelconque des revendications précédentes, **caractérisée en ce que** l'élément d'isolation (8) est scellé sur la plaque support (4) dessus ou à l'intérieur ou est fritté ou collé sur la plaque support (6).

5. Garniture de frein à disques (2) selon l'une quelconque des revendications précédentes, **caractérisée en ce que** l'élément d'isolation (8) est fixé par complémentarité de forme sur la plaque support (6).

6. Garniture de frein à disques (2) selon l'une quelconque des revendications précédentes, **caractérisée en ce que** l'élément d'isolation (8) est fixé par adhérence des forces sur la plaque support (6).

7. Garniture de frein à disques (2) selon l'une quelconque des revendications précédentes, **caractérisée en ce que** l'élément d'isolation (8) est un élément d'isolation thermique.

8. Garniture de frein à disques (2) selon l'une quelconque des revendications précédentes, **caractérisée en ce que** l'élément d'isolation (8) est un élément d'isolation de vibrations ou un élément d'insonorisation (8).

9. Garniture de frein à disques (2) selon l'une quelconque des revendications précédentes, **caractérisée en ce qu'**une couche d'isolation (20) est disposée entre la garniture de frottement (4) et la plaque support (6).
